# EUROPEAN PATENT APPLICATION

(11) **EP 1 832 511 A1**
(43) Date of publication of application: **12.09.2007**
(21) Application number: 04821202.1
(22) Date of filing: 07.12.2004
(51) Int. Cl.: B64C 27/20, B64C 27/24

(54) **ROTATING DUCT TYPE ROTOR WITH SHROUD**

(30) Priority: 27.01.2004 JP 2004048686
(71) Applicant: Ikeda, Kaidou, Nishitokyo-shi Tokyo 1880013 (JP)
(72) Inventor: Ikeda, Kaidou, Nishitokyo-shi Tokyo 1880013 (JP)
(74) Representative: Grünecker, Kinkeldey, Stockmair & Schwanhäusser Anwaltssozietät
(86) International application number: PCT/JP2004/018183
(87) International publication number: WO 2005/070763

(57) **Abstract**

[Subject]

In the conventional shrouded rotating wing, if it is of a large caliber and used in a horizontal position, it is difficult for rotatable portions to rotate due to deflection or distortion of rotor blades or due to compression resulting from expansion caused by a centrifugal force and heat, although there occurs no problem in case of the shrouded rotating wing being of a small caliber and used in a vertical position. Moreover, if an attempt is made to remedy expansion and contraction, such as deflection or distortion with use of an electromechanical device, the structure becomes complicated and the weight increases.

[Solution]

In the rotatable duct type shrouded rotating wing according to the present invention, permanent magnets are arranged in the outer periphery portion of a rotatable duct, rotor blades are connected to the inner periphery portion of the rotatable duct, the rotor blades having a rotatable support portion at every about 2.5 m to prevent deflection or distortion, the shroud and the rotatable duct are constantly in contact with each other in the vertical direction, and an appropriate horizontal space is ensured between the inner periphery portion of the shroud and the outer periphery portion of the rotatable duct to permit expansion and contraction of the rotatable duct and the rotor blades. According to this construction, even if the shrouded rotating wing is of a large caliber and is used in a horizontal position and undergoes a rapid change of direction in a mounted state thereof to a turntable, it can rotate always stably and can generate lift and thrust.

## Description

### [Field of Art]

The present invention relates to a shrouded rotating wing having an opening size (hereinafter referred to as "caliber") exceeding a radius of approximately 3 m and based on a linear motor driving principle. Even when attached to a rotatable object such as, for example, a turntable and subjected to a rapid change of blow-off direction, the shrouded rotating wing can ensure a stable drive.

### [Background Art]

The mechanism of coupling an output from a prime mover such as a turbine positioned near the center of a rotating wing to a central driving shaft of the rotating wing to rotate blades, thereby obtaining lift or thrust, has heretofore been used frequently in helicopters and other rotorcrafts. However, the method of making a rotating wing rotate through a shaft located centrally of the rotation requires a vast amount of energy and thus the efficiency has been low.

Patent Literatures 3 and 4 propose to apply a shrouded rotating wing to a tail rotor portion of a single rotor type helicopter. This shrouded rotating wing can rotate blades efficiently and change the rotational speed freely by making a change from the conventional method of transferring power to the central shaft of rotation to a method of generating a driving force at wing tips.

Patent Literature 4 discloses a driving method based on a linear motor principle using shroud-side magnets and wing-tip magnets as means for generating a driving force at wing tips. As forms for carrying out the driving method, it proposes a method of fitting the wing-tip magnets into the shroud side and a method wherein the wing-tip magnets are allowed to float within a space near the shroud-side magnets. In connection with the former method, it further proposes a method using neither a rotary shaft nor a hub in the wing center portions of rotor blades and a method wherein the wing center portions of rotor blades are connected to a rotary shaft. However, in the former type wherein the wing tips are fitted into a shroud and neither a rotary shaft nor a hub is used, when the shrouded rotating wing is of a large caliber and is used in a horizontal position, blades fall off due to their own weight and the rotating wing cannot withstand a sudden change of direction. In the type using a rotary shaft in the wing center portions of rotor blades, no consideration is given to expansion and contraction of the rotor blades, so when the wing caliber is large, the wing tips fitted in the shroud are pulled strongly toward the wing center portions due to the own weight of the rotor blades at the time of parking, resulting in the resistance increases to an unrotatable extent. Even if the rotating wing can start and begin rotating, there is a great possibility of the rotating wing becoming unrotatable because no consideration is given to expansion and contraction induced by a centrifugal force or heat. In the latter type wherein the wing tips are allowed to float near the intra-shroud magnets, due to deflection or distortion of the rotor blades during parking, the wing-tip magnets fall off from the space in the shroud and the gap between the intra-shroud magnets and the wing-tip magnets increases largely, making the generation of a driving force impossible. Thus, a shrouded rotating wing having a small caliber of about 50 to 60 cm in terms of radius is applicable when used in the vertical position, that is, when used in a tail rotor portion of a single rotor type, but it is very difficult to use a shrouded rotating wing of a large caliber in the horizontal position or in a place where the blow-off direction is changed rapidly such as that in Patent Literature 1.

In Patent Literature 3, the principle of an electric motor (basically the same as the principle of a linear motor) is enlarged. According to this enlarged principle, a rectifier is mounted on a rotary shaft and an electric current converted to an alternating voltage by the rectifier is conducted from wing tips onto a ring through rotor blades to magnetize electromagnetic coils including an iron core which are embedded in the ring, thereby affording a driving force. Therefore, the ring and the blade tips are fixed together, and when the blades expand or contract to a larger extent than 3~5 mm estimated by the inventor concerned, the operation of the rotating wing becomes difficult. Besides, since the coils for flowing therein of an electric current to generate a magnetic force are embedded together with an iron core into the ring, it is presumed that the ring itself will produce heat. When these influences are taken into account, even if the rotating wing is used in such a vertical position as illustrated in the drawings of Patent Literature 3, the diameter of 1 to 1.2 m (radius 50~60 cm) estimated by the inventor concerned is considered to be a limit of size capable to being manufactured.

As Patent Literatures 2 and 3 have noticed, the length of each rotor blade changes due to a centrifugal force thereof or a change in temperature. When the rotating wing concerned is about 0.5 to 0.6 m (50 to 60 cm) in radius and is used in a vertical position like the tail rotor as in Patent Literatures 3 and 4, a change in length, even when estimated to a maximum value, is about 0.6% of the rotor blade length, i.e., 0.003 to 0.004 m (3 to 4 mm). Thus, the change is within the range of millimeter unit and therefore can be absorbed by an outer projection or the like of the ring as in Patent Literature 3. However, when the rotating wing is used horizontally in the position of a main rotor, the influence of deflection or distortion of the rotor blades is added in addition to the centrifugal force and the temperature change, and during parking, a decrease in projection radius of about 2% is observed in the direction opposite to the centrifugal force direction. When the radius of the main motor is 5m, the distance of expansion caused by the centrifugal force for example is about 0.03 m (3 cm) and a decrease in projection radius due to deflection or distortion is as large as about 0.1 m (10 cm), with the total being 0.13 m (13 cm) which is of the order of ten-odd centimeters. Thus, in the methods disclosed in Patent Literatures 3 and 4, it is extremely difficult to maintain an appropriate gap between magnets which create a driving force and it has so far been impossible to adopt such an operation method as in Patent Literature 1.

In Patent Literature 2, in order to absorb deflection and distortion of the rotor blades which exert influence on the change in radius of gyration reaching ten-odd centimeters, thereby keeping the gap between the shroud-side magnets and the rotor blade wing-tip magnets at an appropriate value and allowing the linear motor driving principle to be exhibited in a stable manner, an electromechanical device is installed within each rotor blade. However, the weight of the rotor blades increases and the structure thereof becomes complicated, resulting in an increase in the number of parts and a fear of an increase in the number of failure generating factors. Moreover, the wind tips are each independent, so when a load is imposed on a certain specific rotor blade, the dispersion of the load is insufficient and the load of the wing tip of that portion imposed on the shroud becomes large. Particularly, when the rotating wing is put on a single-shaft turntable and attached to a flying body as in Patent Literature 1, abnormal pressures are generated against the shroud at two positions one of which is the nearest to and the other remotest from a side wall of the flying body by gyro effect. Even if such portions are strengthened, the service life may be shortened extremely or as the case may be the portions in question may be damaged.

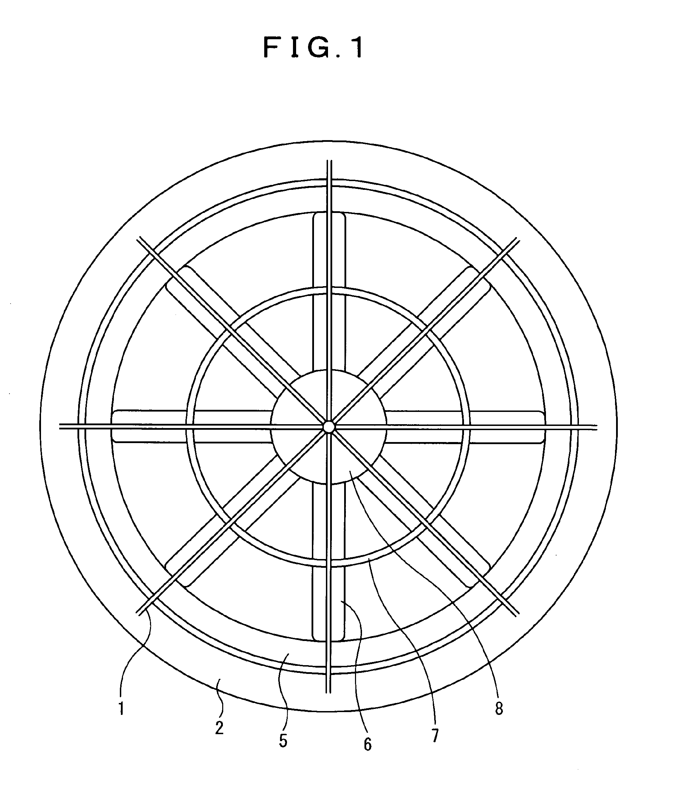

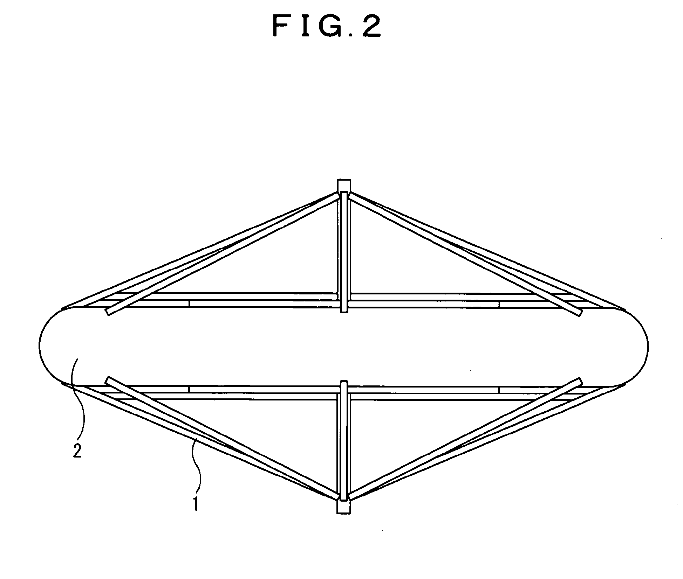

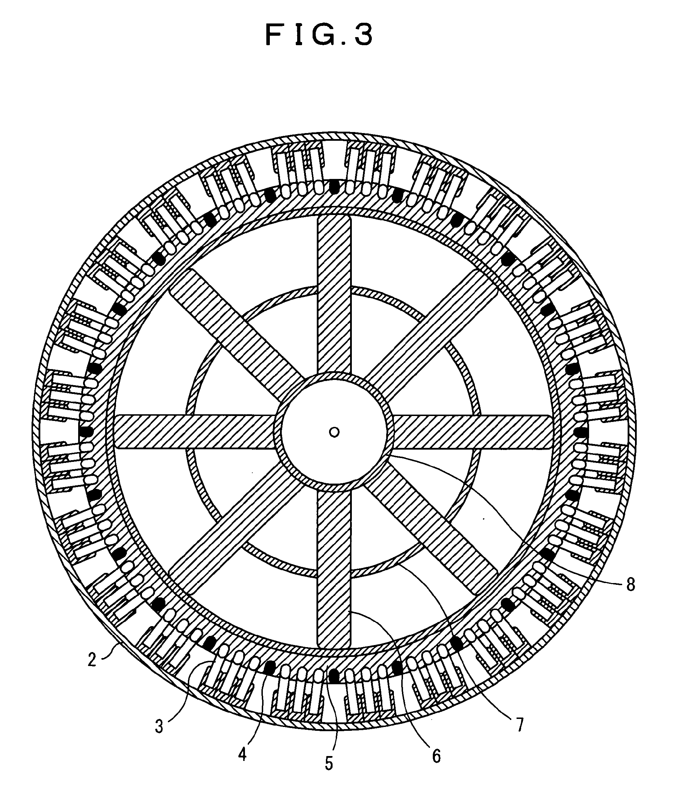

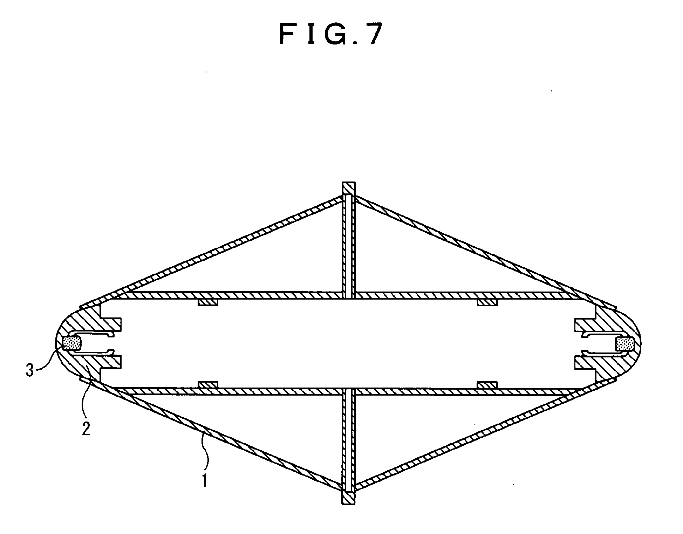

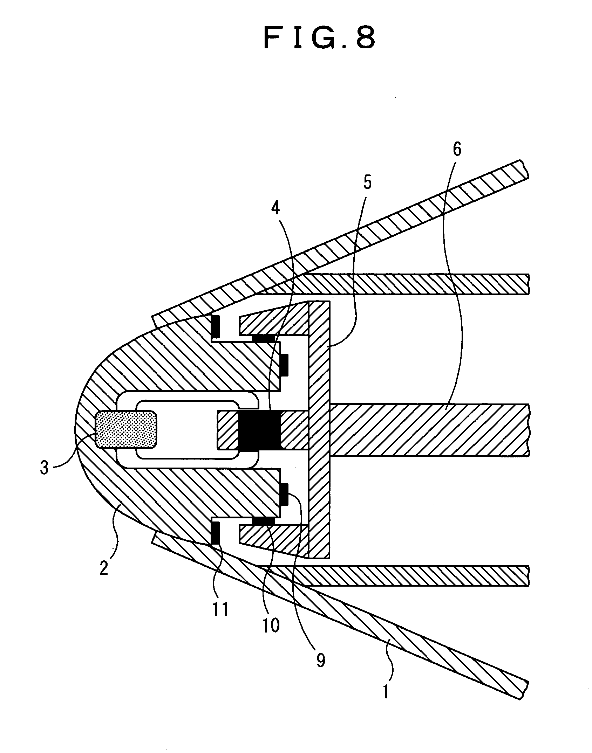

[Patent Literature 1]
   Japanese Patent Application No. 2003-290873 (Claim 1, Fig. 13)
[Patent Literature 2] Japanese Patent Application No. 2002-383031 (Claim 1, Figs. 1, 2 and 3)
[Patent Literature 3] Japanese Patent Laid-Open Publication No. 2001-097288 (Claims 1, 2 and 6, Paragraphs 0024, 0049 and 0050, Figs. 7 and 8)
[Patent Literature 4] Japanese Patent Laid-Open Publication No. Hei 7 (1995)-205897 (Claim 1, Paragraph 0008, Figs. 1, 2 and 3)

### [Disclosure of the Invention]

### [Problems to be Solved by the Invention]

A shrouded rotating wing based on the driving principle of a linear motor or a shrouded rotating wing based on the principle of an electric motor is simple in structure and light in weight when it is of a small caliber and is used vertically. However, when a shrouded rotating wing of a large caliber is used horizontally, it may become difficult keep appropriate the gap between the driving force generating electromagnets and permanent magnets due to deflection or distortion induced by a centrifugal force, heat, or the own weight of rotor blades, or the rotation of the rotatable portion may become difficult due to compression caused by expansion or contraction of rotor blades for example. Further, if an attempt is made to keep the gap between electromagnets and permanent magnets appropriate with use of an electromechanical device, not only the structure becomes complicated but also the weight of rotor blades, etc. increases. Even if there occurs no problem when a shrouded rotating wing is used without a sudden change in direction despite it being of a large caliber and used in a horizontal direction, a strong pressure based on gyro effect is developed against the shroud if the direction is changed suddenly.

### [Means for Solving the Problems]

According to the present invention, first there is provided a duct (hereinafter referred to as "rotatable duct", i.e., vertical direction) having permanent magnets and capable of rotating stably in accordance with a rotating magnetic field created by electromagnets disposed within a shroud. The shroud and the rotatable duct are in contact with each other constantly in the vertical direction (the direction orthogonal to a rotating surface) and are in a shape such that the inner periphery portion of the shroud located outside is covered with the outer periphery portion of the rotatable duct located inside. In the horizontal direction (the direction parallel to the rotating surface, i.e., lateral direction) the shroud and the rotatable duct are disposed through an appropriate space so as not to be influenced by expansion and contraction of the rotatable duct itself or of rotor blades connected to the inner periphery portion of the rotatable duct, and are normally not in contact with each other. Electromagnets are arranged in the inner periphery portion of the shroud, while permanent magnets are arranged in the outer periphery portion of the shroud correspondingly to the electromagnets. Therefore, when a rotating magnetic field is developed in the shroud, the rotatable duct rotates in response thereto.

In the case where the rotor blades whose wing tips are connected to the inner periphery portion of the rotatable duct are of a small caliber about 3 m in terms of radius, the wing center portions thereof are connected directly to a hub or a central shaft (hereinafter referred to as "hub or the like" hereinafter) located at the axis of rotation. In the case of a large caliber exceeding about 5 m in radius, a support portion that is rotatable (hereinafter referred to as "rotatable support portion") for supporting the rotor blades is provided in a ratio of one said rotatable support portion at every about 2.5 m halfway on the rotor blades to prevent the rotor blades from being deflected or distorted by their own weight, and the wing center portions of the rotor blades are connected to the hub or the like located in the axis of rotation.

Thus, in the present invention using, as main components, shroud, rotatable duct, rotatable support portion, hub or the like, and rotor blades, even when the shrouded rotating wing used is of a large caliber, deflection and distortion of the rotor blades can be prevented by the rotatable support portion, whereby, as to expansion and contraction of the rotatable duct to which a countermeasure is to be taken, a limitation can be made to the influence of both centrifugal force and heat. Therefore, even in the case of a rotating wing of a large caliber, the countermeasure to such expansion and contraction can be attained by only ensuring an appropriate space in the horizontal direction (the direction parallel to the rotating surface, i.e., lateral direction) between the shroud and the rotatable duct which covers the inner periphery portion of the shroud.

Further, since the wing tips of each blade is connected to the rotatable duct, even if the rotor blades are attached to a turntable capable of changing the direction rapidly and is operated, the pressure based on gyro effect and imposed on the wing tips is dispersed by the rotary duct and such a partial and strong pressure that cause damages the shroud is not developed. Accordingly, it is possible to ensure a stable rotation constantly and hence the resulting lift and thrust can be obtained in a stable manner.

### [Effect of the Invention]

In comparison with the conventional method which can afford only a small lift despite a large horsepower, the present invention permits the generation of a large lift even with a small power. Therefore, if the method of connecting a drive unit to the central axis of a rotating wing to rotate blades and obtain lift such as a conventional helicopter or the like is not adopted and instead the rotatable duct type shrouded rotating wing based on the linear motor driving principle according to the present invention is applied to the position of a main rotor, it is possible to attain the reduction of weight, simplification of structure, and saving of fuel consumption. As to the conventional shrouded rotating wing so far invented, it is difficult to use it horizontally in a state of a large caliber. On the other hand, according to the present invention, not only rotor blades of a large caliber can be used in a horizontal position, but also even if such rotor blades are mounted to a turntable capable of changing the blow-off direction rapidly and are operated, it is possible to obtain a stable driving force. Thus, the shrouded rotating wing of the present invention is applicable also to Patent Literature 1.

In a conventional rotorcraft such as a helicopter, the transfer of generated lift to the body of the rotorcraft is performed through the wing center portions of rotor blades, and wing tips are open to the air. Therefore, at wing tips where the air speed is the highest among mass points of rotor blades, it is necessary to prevent the wing tips from being stripped upward due to a relative excess of lift. More particularly, it is necessary to use a complicated structure including a twist which is effected for example by making the different angle of elevation of the rotor blades between wing tips and wing center. On the other hand, in the present invention, since the transfer of generated lift is performed through wing tips, there is no fear of the wing tips being stripped upward. Therefore, it is not necessary to perform a twisting work or the like for the rotor blades, that is, the manufacturing cost can be reduced.

### [Best Mode for Carrying Out the Invention]

Fig. 1 schematically shows the appearance of a rotatable duct type shrouded rotating wing based on the linear motor driving principle according to the present invention.

### [First Embodiment]

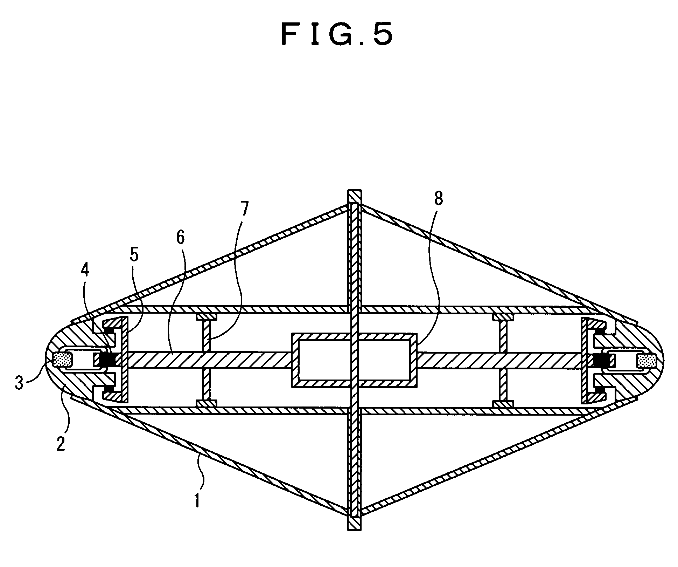

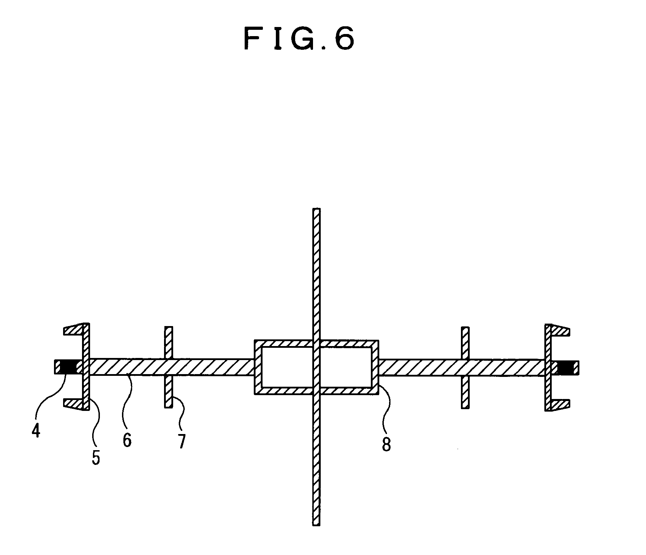

Figs. 1 to 8 illustrate a rotatable duct type shrouded rotating wing according to an embodiment of the present invention wherein electromagnets are arranged annularly in the inner periphery portion of a shroud, while permanent magnets are arranged in the outer periphery portion of a rotatable duct, and a rotating magnetic field is generated by the shroud-side electromagnets to rotate the rotatable duct and rotor blades, with consequent generation of lift and thrust.

### [Second Embodiment]

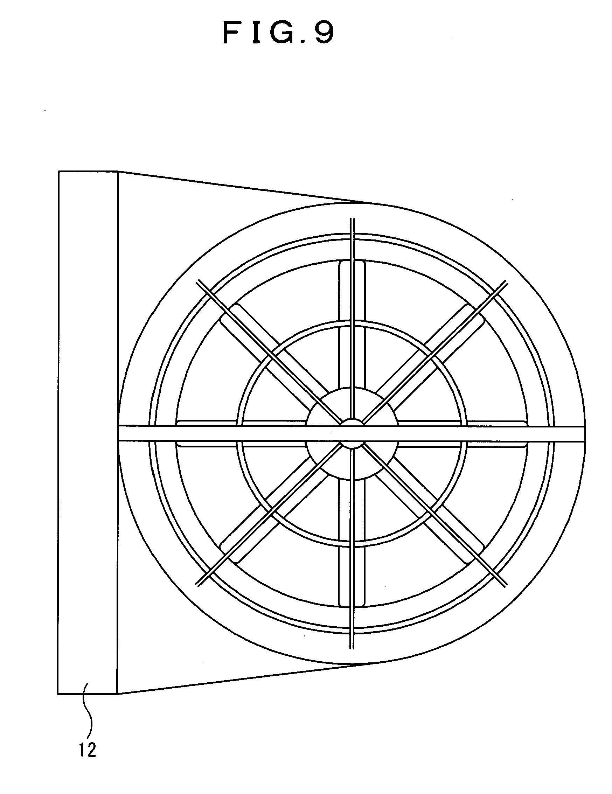

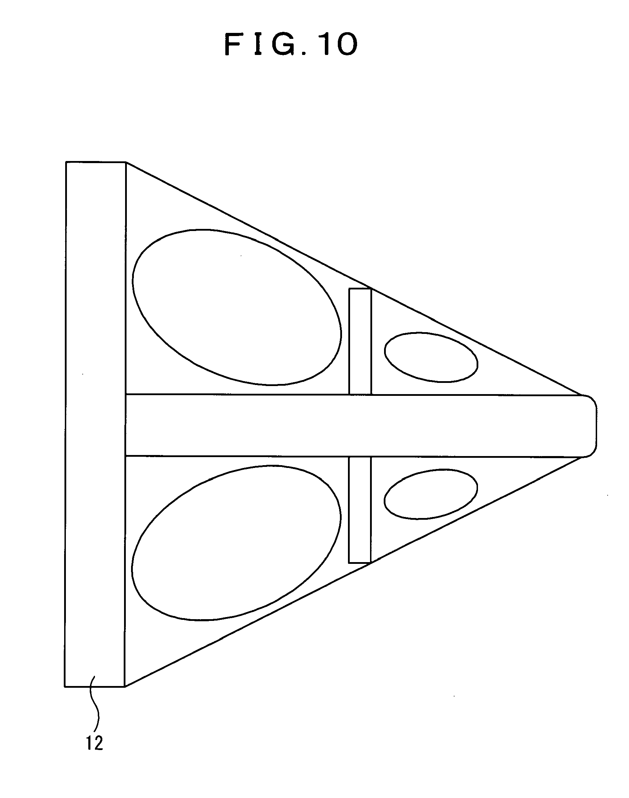

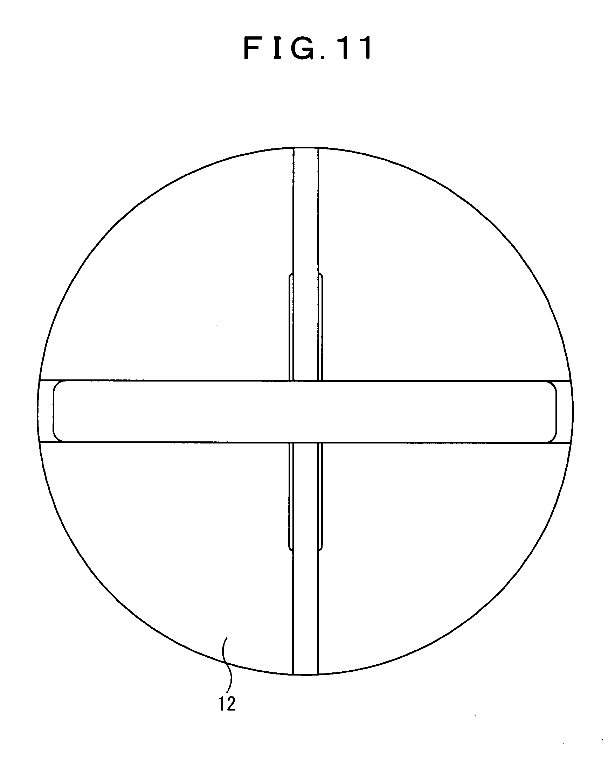

Figs. 9 to 11 illustrate an embodiment of the present invention in which the rotatable duct type shrouded rotating wing is mounted to a turntable (a rapid wind direction changer) which is used in Patent Literature 1.

### [Industrial Applicability]

It is possible to provide a lift device and a thrust device both capable of producing a light-weight and strong air volume in a stable manner when applied to a helicopter, a flying platform, or such a flying body as in Patent Literature 1.

### [Brief Description of the Drawings]

Fig. 1 is a plan view of a rotatable duct type shrouded rotating wing based on the linear motor driving principle according to the present invention.
Fig. 2 is a front view of the rotatable duct type shrouded rotating wing (a side view thereof is also the same) .
Fig. 3 is a horizontal sectional view of the rotatable duct type shrouded rotating wing.

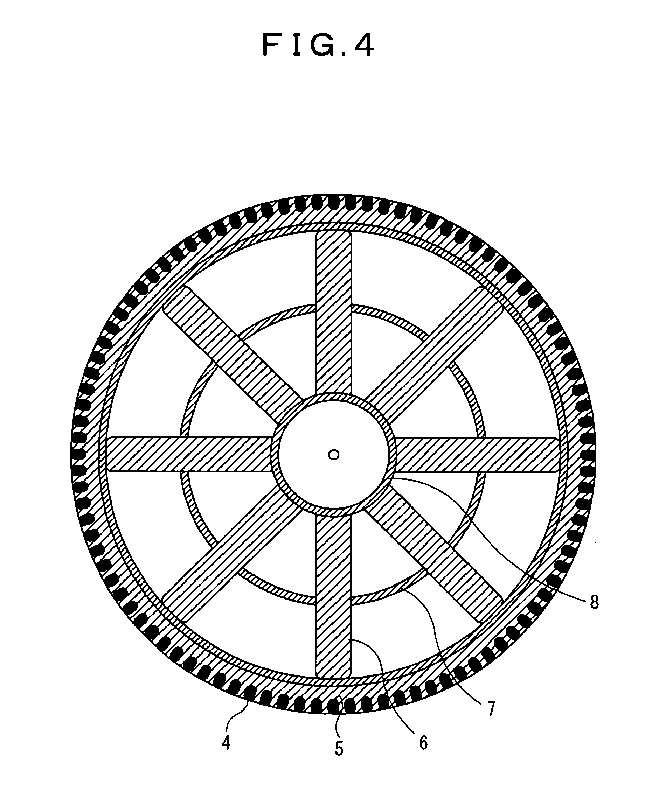

Fig. 4 is a horizontal sectional view of only rotatable portions such as a rotatable duct and rotor blades in the rotary duct type shrouded rotating wing. In the rotating wing, the air speed at mass points thereof increases with separation from the rotational center. Therefore, when the angles of elevation of the rotor blades are the same at any position, the lift at wing tips becomes excessive in comparison with that at the wing center portions, resulting in such a shape as the wing tips being stripped upward with rotation of the rotor blades, and the lift against the just-underlying position decreases. To avoid this inconvenience, open wing-tip rotor blades used in the recent rotorcrafts are designed such that the angle of elevation of each rotor blade is made deep near the wing center portion the rotor blade and is made shallow near the wing tip to prevent the wing tip from being stripped upward, thereby permitting a uniform lift to be obtained throughout the whole of the rotor blades. Such a design is unavoidable in the conventional rotorcrafts such as helicopters because the lift generated in the rotor blades is used as the lift of the rotorcraft body via a rotary shaft located at the wing center. However, an optimized place of the balance between the air resistance of rotation and the generated lift is only a part on the rotor blades, and in the other portion the angle of elevation of each rotor blade has not so far been considered optimal. On the other hand, in the present invention, lift is transferred to a rotorcraft body via wing tips, so there is no problem even if the generated lift is offset to wing tips. Thus, an optimized value of elevation angle can be imparted to any portion of the rotor blades. For this reason, the rotor blades according to the present invention are flat and free of any twist.
Fig. 5 is a vertical sectional view of the rotatable duct type shrouded rotating wing.
Fig. 6 is a vertical sectional view of only rotatable portions such as the rotatable duct and the rotor blades in the rotary duct type shrouded rotating wing.
Fig. 7 is a vertical sectional view of only unrotatable portions such as the shroud and fixed support portion in the rotatable duct type shrouded rotating wing.
Fig. 8 is a vertical sectional view of the shroud, rotatable duct, and the vicinity thereof, which generate a driving force of the rotatable duct type shrouded rotating wing. The rotatable duct is constituted by a cylinder and upper and lower portions of the cylinder are in contact with the shroud constantly through upper and lower bearings so as to enclose the shroud from the inside. Lift or thrust of the rotor blades is transmitted to the shroud side through the contact portions. Conversely, the outer periphery portion of the rotatable duct and the inner periphery portion of the shroud are usually spaced a predetermined distance from each other and not in contact with each other. This distance is an appropriate distance such that when the rotating portion of the rotatable duct for example expands to the greatest extent due to a centrifugal force or heat, it comes into contact with a bearing provided on the shroud side and becomes stable.
Fig. 9 is a plan view of the rotatable duct type shrouded rotating wing as mounted to a turntable.
Fig. 10 is a front view of the rotatable duct type shrouded rotating wing as mounted to the turntable.
Fig. 11 is a side view of the rotatable duct type shrouded rotating wing as mounted to the turntable.

### [Explanation of Reference Numerals]

- 1: (fixed) support portion
- 2: shroud
- 3: electromagnet
- 4: permanent magnet
- 5: rotatable duct
- 6: rotor blade
- 7: rotatable support portion
- 8: hub
- 9: bearing (contact only upon expansion)
- 10: bearing (contact constantly)
- 11: bearing (contact only upon expansion)
- 12: turntable

## Claims

1. A rotatable duct type shrouded rotating wing having a shrouded rotating wing and its an opening size (hereinafter referred to as "caliber") exceeding a radius of approximately 3 m and based on a linear motor driving principle, said rotary type shrouded rotating wing comprising the following shroud, rotary duct, rotatable support portions, hub or the like, and rotor blades, as main components:
(1) a shroud with electromagnets able to form a rotating magnetic field being arranged annularly in the interior thereof;
(2) a duct that is rotatable (hereinafter referred to as "rotatable duct") with permanent magnets and rotor blades connected to outer and inner periphery portions thereof respectively, said rotatable duct having a shape such that in the vertical direction (the direction orthogonal to a rotating surface, i.e., vertical direction) the rotatable duct is in contact with said shroud constantly, while in the horizontal direction (the direction parallel to the rotating surface, i.e., lateral direction), the rotatable duct encloses the inner periphery portion of said shroud while normally maintaining an appropriate contactless space to permit expansion and contraction of the rotatable duct;
(3) a support portion that is rotatable (hereinafter referred to as "rotatable support portion") formed in the shape of a cylinder sandwiching said rotor blades in the vertical direction (the direction orthogonal to the rotating surface, i.e., vertical direction), said rotatable support portion being connected at a central portion in the vertical direction (the direction orthogonal to the rotating surface, i.e., vertical direction) of the cylinder to said rotor blades and being in contact at both ends in the vertical direction (the direction orthogonal to the rotating surface, i.e., vertical direction) of the cylinder with a fixed support portion, thereby holding the rotor blades in the vertical direction (the direction orthogonal to the rotating surface, i.e., vertical direction) to prevent the rotor blades from being deflected or distorted by their own weight and permitting limitation to the influence of both centrifugal force and heat with respect to expansion and contraction of said rotatable duct which should be coped with, said rotatable support portion being rotatable together with said rotor blades while both ends in the vertical direction (the direction orthogonal to the rotating surface, i.e., vertical direction) of the cylinder are kept in contact with the fixed support portion;
(4) a hub or a central shaft (hereinafter referred toas "hub or the like") positioned at the center of rotation of said rotor blades by the fixed support portion to connect wing center portions of the rotor blades; and
(5) said rotor blades, the rotor blades having wing tips connected to the inner periphery portion of said rotatable duct and wing center portions connected to the hub or the like, the rotor blades having said rotatable support portion in a ratio of one said rotatable support portion at every about 2.5 m halfway on blades thereof from the direction of said wing center portions to said wing chip,
wherein, even in an environment involving a rapid change of a blow-off direction of the shrouded rotating wing, lift and thrust which the rotor blades connected to the rotatable duct generates can be obtained always stably irrespective of the caliber or a mounted state of the shrouded rotating wing to a flying body, or the blow-off direction.
